# EUROPÄISCHE PATENTSCHRIFT

(11) **EP 2 440 606 B1**
(45) Veröffentlichungstag und Bekanntmachung des Hinweises auf die Patenterteilung: **24.06.2015**
(21) Anmeldenummer: 10716330.5
(22) Anmeldetag: 23.04.2010
(51) Int. Cl.: C08J 7/04

(54) **VERFAHREN ZUR BESCHICHTUNG EINES STRANGPROFILS**
METHOD FOR COATING AN EXTRUDED SECTION
PROCÉDÉ DE REVÊTEMENT D'UN PROFILÉ EN LIGNE CONTINUE

(30) Priorität: 12.06.2009 DE 102009026914
(43) Veröffentlichungstag der Anmeldung: 18.04.2012
(73) Patentinhaber: Robert Bosch GmbH, 70442 Stuttgart (DE)
(72) Erfinder: VAN DE ROSTYNE, Kris, B-3360 Opvelp (BE); CLERX, Bart, B-3746 Bilzen (BE)
(86) Internationale Anmeldenummer: PCT/EP2010/055456
(87) Internationale Veröffentlichungsnummer: WO 2010/142489

(56) Entgegenhaltungen:
- WO-A2-02/081582
- DE-A1-102007 012 924
- DE-A1-102007 046 914

## Beschreibung

### Stand der Technik

Die Erfindung betrifft ein Verfahren zur Beschichtung eines Strangprofils aus einem Elastomermaterial mit einem Pulvermaterial.

Strangprofile aus Elastomermaterialien finden zum Beispiel Einsatz als Wischgummis in Scheibenwischern. Weitere Einsatzbereiche von Strangprofilen aus einem Elastomermaterialt sind zum Beispiel auch Fenster- oder Türdichtungen. Um reibungsinduzierte Geräuschbildung zu unterdrücken oder zumindest zu reduzieren werden die Strangprofile aus dem Elastomermaterial vielfach mit einem reibungsvermindernden Material beschichtet. Insbesondere bei Wischgummis für Scheibenwischer ist das Aufbringen einer Beschichtung mit einem reibungsvermindernden Zusatz von wesentlicher Bedeutung für einen reibungslosen Betrieb über die Lebensdauer des Scheibenwischers.

In EP-A 1 561 656 ist zum Beispiel ein Wischerblatt für einen Scheibenwischer beschrieben, bei dem auf der Oberfläche der Wischgummilippe eine Folie oder eine Granulatschicht aufgebracht ist. Als Material für das Granulat wird ein Polymermaterial eingesetzt, durch das die Reibung vermindert werden kann.

Das Aufbringen eines Pulvers auf ein Polymermaterial erfolgt zum Beispiel dadurch, dass direkt ein Pulver aufgetragen wird. Bei sehr kleinen Korngrößen hat dies jedoch den Nachteil, dass die Gefahr von Staubexplosionen besteht. Auch ist es beim Aufbringen eines trockenen Pulvers nicht möglich, zusätzliche Additive zuzusetzen, mit denen die Produkteigenschaften weiter beeinflusst werden können.

Ein weiterer Nachteil von Pulverbeschichtungsverfahren ist, dass es nur unter erschwerten Bedingungen möglich ist, beispielsweise eine Monolage aufzubringen. Ins-Insbesondere bei Einsatz des Strangprofils aus dem Elastomermaterial als Wischgummi für einen Scheibenwischer ist es jedoch erforderlich, dass das Pulvermaterial eine gleichmäßige Monolage auf dem Elastomermaterial ausbildet, um die gewünschten funktionellen Eigenschaften zu erhalten. Auch ist es notwendig, dass die Monolage aus dem Pulvermaterial keinen geschlossenen Film bildet und dass die einzelnen Partikel nicht koagulieren.

Aus der WO 02081582 A2 sind Gleitlackkomponenten, Gleitlacke und Verfahren zum Beschichten von Elastomeren von Scheibenwischerblättern bekannt.

Beispielsweise ist ferner aus der DE 102007046914 A1 ein Gleitlack zur Beschichtung von Gummimaterialien, beispielsweise von Wischgummis von Wischblättern für Scheibenwischer eines Kraftfahrzeugs bekannt, wobei zur Verbesserung der physikalischen Eigenschaften eines derartigen Wischgummis, das Gummimaterial mit einem Gleitlack beschichtet wird.

Darüber hinaus ist beispielsweise aus der DE 102007012924 A1 ein Wischgummi und ein Verfahren zu seiner Herstellung bekannt. Dabei betrifft die dort offenbarte Erfindung ein Wischgummi und ein Verfahren zu seiner Herstellung, insbesondere für einen Scheibenwischer, aus einem geformten, vulkanisierbaren, elastomeren Material, dessen Oberfläche eine Oberflächenschicht aufweist, die hydrophob ist, mit einem Kontaktwinkel gegenüber Wasser größer 90°, bevorzugt größer 120°, und einer Oberflächenstruktur mit Erhebungen und/oder Vertiefungen im Mikrometerbereich.

### Offenbarung der Erfindung

Ein erfindungsgemäßes Verfahren zur Beschichtung eines Strangprofils aus einem Elastomermaterial mit einer Monolage aus einem Pulvermaterial umfasst folgende Schritte:
(a) Extrusion des Strangprofils aus dem Elastomermaterial,
(b) Aufbringen einer Suspension, die das Pulvermaterial in einem Lösungsmittel enthält, auf das Strangprofil,
(c) Entfernen des Lösungsmittels,
(d) Vulkanisieren des Strangprofils,
wobei das Aufbringen der Suspension auf das Strangprofil in Schritt (d) und das Entfernen des Lösungsmittels in Schritt (c) vor oder nach dem Vulkanisieren des Strangprofils in Schritt (d) erfolgen kann, wobei das Pulvermaterial (21) ein Polyphenylen-Ether (PPE) enthält.

Das erfindungsgemäße Verfahren ermöglicht es, ein Pulvermaterial in einer Monolage auf das Elastomermaterial aufzubringen. Durch den Einsatz einer Suspension wird zudem vermieden, dass durch das Pulver eine geschlossene Schicht auf dem Elastomermaterial ausgebildet wird. Auch hat der Einsatz einer Suspension den Vorteil, dass kleinere Partikel eingesetzt werden können als beispielsweise bei einem Pulverbeschichtungsverfahren, da die Gefahr einer Staubexplosion, die sich beispielsweise bei Verarbeitung eines trockenen Pulvers ergeben kann, ausgeschlossen wird.

In Abhängigkeit vom Einsatz des Strangprofils aus dem Elastomermaterial können unterschiedliche Elastomermaterialien eingesetzt werden. Wenn das Strangprofil zur Herstellung von Wischgummis für Scheibenwischer verwendet wird, so eignen sich als Elastomermaterialien zum Beispiel Naturkautschuk (NR), Chloroprenkautschuk (CR), Butadien-Kautschuk (BR), Styrol-Butadien-Kautschuk (SBR), Ethylen-Propylen-Copolymere (EPM), Ethylen-Propylen-Dien-Terpolymere (EPDM), Ethylen-VinylacetatCopolymere (EVM), chloriertes Polyethylen (CM), chlorsulfoniertes Polyethylen (CSM), Acrylnitril-Butadien-Kautschuk (NBR), hydrierter Acrylnitril-Butadien-Kautschuk (HNBR), Fluorkautschuk (FPM), Polyurethan-Elastomer (PUR), Silikonkautschuk, Mischungen aus Acrylnitril-Butadien-Kautschuk und Polyvinylchlorid (NBR/PVC), sowie Mischungen aus diesen Materialien.

Besonders bevorzugt ist das Elastomermaterial ausgewählt aus der Gruppe bestehend aus Ethylen-Propylen-Dien-Terpolymere, Naturkautschuk, Chloropren-Kautschuk oder einer Mischung daraus.

Die Herstellung des Strangprofils aus dem Elastomermaterial erfolgt üblicherweise durch ein Extrusionsverfahren. Es ist jedoch auch möglich, das Strangprofil zum Beispiel durch ein Spritzgussverfahren zu formen. Bevorzugt ist jedoch ein Extrusionsverfahren.

Vorteil des Extrusionsverfahrens ist es, dass hiermit ein Endlosprofil hergestellt werden kann, das anschließend auf die gewünschte Länge geschnitten werden kann. Im Unterschied dazu ist es bei einem Spritzgussverfahren zum Beispiel nur möglich, gleiche Teile mit einem Werkzeug herzustellen. Für unterschiedlich lange Profile wären somit unterschiedliche Werkzeuge erforderlich.

Um ein stabiles Elastomer zu erhalten, wird das Strangprofil nach der Extrusion vulkanisiert. Bei der Vulkanisation wird das Material einer Wärmebehandlung unterzogen. Zur Vulkanisation ist es zum Beispiel möglich, das Strangprofil durch ein Salzbad zu leiten. Das Salzbad weist dabei vorzugsweise eine Temperatur im Bereich von 160 bis 250 °C auf. Neben dem Einsatz eines Salzbades ist es jedoch zum Beispiel auch möglich, zum Beispiel einen Heißluftofen oder einen infrarot-beheizten Ofen zur Vulkanisation einzusetzen.

Das Pulvermaterial, das in der Suspension enthalten ist, die auf das Elastomermaterial aufgebracht wird, enthält vorzugsweise neben dem Polyphenylen-Ether (PPE) Zusätzlich ein Material ausgewählt aus der Gruppe bestehend aus Polyolefinen, insbesondere Polyethylen mit ultrahohem Molekulargewicht (UHMW-PE), Polyethylen mit hohem Molekulargewicht (HMW-PE), Polyethylen (PE), fluoriertes Ethylen-Propylen (FEP), Polyphenylen-Ether (PPE), Perfluoralkoxy-Polymere (PFA), Polycarbonate (PC), Polyoxymethylen (POM), Polyacrylate, Polyamide (PA), Polyurethane (PUR), Polytetrafluorethylen (PTFE), Polyethylenterephthalat (PET), Polybutylenterephthalat (PBT) sowie Mischungen aus diesen Materialien.

Das eingesetzte Pulver weist vorzugsweise einen mittleren Partikeldurchmesser d50 von weniger als 50 µm, insbesondere im Bereich 2 bis 20 µm, auf.

Um eine Monolage aus dem in der Suspension enthaltenen Pulvermaterial auf dem Elastomer zu erhalten, wobei die Monolage keine geschlossene Bedeckung des Elastomermaterials bildet, ist es bevorzugt, wenn der Anteil an Pulvermaterial in der Suspension im Bereich von 5 bis 60 Gew.-%, insbesondere im Bereich von 10 bis 50 Gew.-% liegt. Um eine stabile Verbindung des Pulvermaterials mit dem Elastomermaterial zu erhalten, ist es bevorzugt, wenn die Suspension vor dem Vulkanisieren auf das Elastomermaterial aufgebracht wird. Um zu vermeiden, dass Pulvermaterial agglomeriert bzw. koaguliert oder dass ein Teil der Suspension vom Elastomermaterial abgespült wird, ist es vorteilhaft, die Suspension vor dem Vulkanisieren zu trocknen und dabei das Lösungsmittel zu entfernen. Zum Entfernen des Lösungsmittels kann jedes beliebige, dem Fachmann bekannte Verfahren eingesetzt werden. Bevorzugt wird das Lösungsmittel durch eine Wärmebehandlung entfernt. Eine geeignete Wärmebehandlung, durch die das Lösungsmittel entfernt werden kann, ist zum Beispiel ein Anblasen des Strangprofils mit warmer Luft. Die Geschwindigkeit der Luft, mit der das Strangprofil angeblasen wird, ist dabei so zu wählen, dass die Suspension nicht weggeblasen wird.

Auf dem noch nicht vulkanisierten Elastomermaterial ergibt sich eine gute Haftung des Pulvermaterials, wobei nur Pulver, das direkt auf dem Elastomermaterial aufliegt, haften bleibt. Hierdurch wird die Monolage erzeugt.

Durch das Vulkanisieren verbindet sich anschließend das Pulvermaterial mit dem E-lastomermaterial, so dass dieses eine stabile Verbindung eingeht. Das Pulvermaterial kann somit nach dem Vulkanisieren nicht mehr auf einfache Weise von dem Elastomermaterial entfernt werden.

Durch das Aufbringen des Pulvermaterials werden die Eigenschaften des Elastomermaterials für den gewünschten Einsatzzweck positiv beeinflusst. Wenn das Elastomermaterial zum Beispiel als Wischgummi für einen Scheibenwischer eingesetzt wird, kann durch das Aufbringen des Pulvermaterials der Reibungskoeffizient des Wischgummis herabgesetzt werden. Hierdurch wird ein verbessertes Gleiten auf einer Fensterscheibe ermöglicht.

Auch bei Einsatz des Strangprofils aus dem Elastomermaterial zum Beispiel als Dichtgummi eines Fensters oder einer Tür ist es vorteilhaft, den Reibungskoeffizienten herabzusetzen, um zum Beispiel ein Quietschen zu vermeiden. Auch kann zum Beispiel durch Auswahl eines geeigneten Pulvers vermieden werden, dass Tür- oder Fensterrahmen am Elastomermaterial anhaften.

In einer bevorzugten Ausführungsform werden keine organischen Lösungsmittel zur Bildung der Suspension verwendet. Als Lösungsmittel eignet sich in diesem Fall insbesondere Wasser. Um eine stabile Suspension auf Wasserbasis zu erhalten, ist es vorteilhaft, wenn die Suspension mindestens eine oberflächenaktive Substanz enthält. Geeignete oberflächenaktive Substanzen sind zum Beispiel Tenside, beispielsweise ionische oder nicht-ionische Tenside. Durch die Zugabe der Tenside wird die Suspension stabilisiert. Hierdurch wird vermieden, dass zum Beispiel bei einer längeren Lagerung der Suspension das Pulvermaterial sedimentiert. Auch wird vermieden, dass Pulvermaterial in Leitungen sedimentiert und so zum Beispiel zu einem Verstopfen der Leitungen führen kann. Der Anteil an Tensiden in der Suspension liegt im Bereich von 0,1 bis 10 Gew.-%, insbesondere in Bereich von 0,5 bis 5 Gew.-%. Als Tenside eignen sich zum Beispiel Polyoxyethylen (C₃₆H₇₄O₁₁) als nicht-ionisches Tensid oder beispielsweise als ionisches Tensid ein Natriumsalz der Dodecylbenzsulfonsäure.

Um die Eigenschaften des Strangprofils zu modifizieren oder die Haftung des Pulvermaterials auf dem Elastomermaterial zu verbessern, ist es möglich, dass die Suspension weitere Additive enthält. Geeignete Additive sind zum Beispiel UV-Stabilisatoren, um das Strangprofil bei Einsatz an der Umgebung gegen einfallende UV-Strahlung zu stabilisieren. UV-Stabilisatoren, die eingesetzt werden können, sind zum Beispiel HALS (Hindered Aminic Light Stabilizers) wie beispielsweise Tinuvin 765® der Ciba Corporation. Durch den Zusatz des UV-Stabilisators in die Suspension wird zum einen der Abbau des Pulvermaterials durch UV-Strahlung reduziert und es ist keine Vorbehandlung des Pulvermaterials selbst erforderlich.

Weiterhin kann der Suspension alternativ oder zusätzlich auch ein Haftvermittler zugegeben sein. Mit Hilfe des Haftvermittlers wird die Haftung des Pulvermaterials auf dem Elastomermaterial verbessert. Durch die Verbesserung der Haftung auf dem Elastomermaterial wird zum Beispiel die Lebensdauer eines das Strangprofil aus dem Elastomermaterial enthaltenen Bauteils erhöht. Ein geeigneter Haftvermittler wird zum Beispiel unter dem Handelsnamen Affinity-Engage® von der Firma Dow Corning vertrieben.

Neben dem Aufbringen der Suspension vor dem Vulkanisieren ist es weiterhin auch möglich, zunächst das Elastomermaterial teilzuvulkanisieren, dann die Suspension aufzubringen und das Lösungsmittel zu entfernen und danach einen zweiten Vulkanisationsschritt anzuschließen, um das Elastomermaterial durchzuvulkanisieren. Auch in diesem Fall ist es besonders vorteilhaft, das Lösungsmittel vor dem zweiten Vulkanisationsschritt zu entfernen um eine Monolage aus dem Pulvermaterial zu erhalten, die keinen geschlossenen Film bildet.

Um das Lösungsmittel zu entfernen ist neben einer Wärmebehandlung auch das Aufbringen der Suspension auf ein vorgewärmtes Strangprofil möglich. Auch hierdurch lässt sich das Entfernen des Lösungsmittels beschleunigen. Eine weitere Möglichkeit ist auch ein Vorwärmen der Suspension unmittelbar vor dem Auftrag auf das Strangprofil.

Um eine hinreichend dünn Beschichtung aus der Suspension zu erzielen, die zum Ausbilden einer Monolage des Pulvermaterial auf dem Elastomermaterial führt, ist es bevorzugt, die Suspension durch ein Sprühverfahren auf das Elastomermaterial aufzubringen. Es ist jedoch auch jedes beliebige andere, dem Fachmann bekannte Verfahren zum Aufbringen einer Beschichtung auf ein Substrat einsetzbar. So kann die Beschichtung zum Beispiel auch durch ein Tauchverfahren auf das Strangprofil aus dem Elastomermaterial aufgebracht werden. Bevorzugt ist jedoch das Aufbringen der Suspension durch ein Sprühverfahren.

### Kurze Beschreibung der Zeichnungen

Ausführungsformen der Erfindung sind in den Figuren dargestellt und werden in der nachfolgenden Beschreibung näher erläutert.

Es zeigen:
- Figur 1: eine schematische Darstellung des erfindungsgemäßen Verfahrens,
- Figur 2: eine elektronenmikroskopische Aufnahme eines beschichteten Strangprofils.

### Ausführungsformen der Erfindung

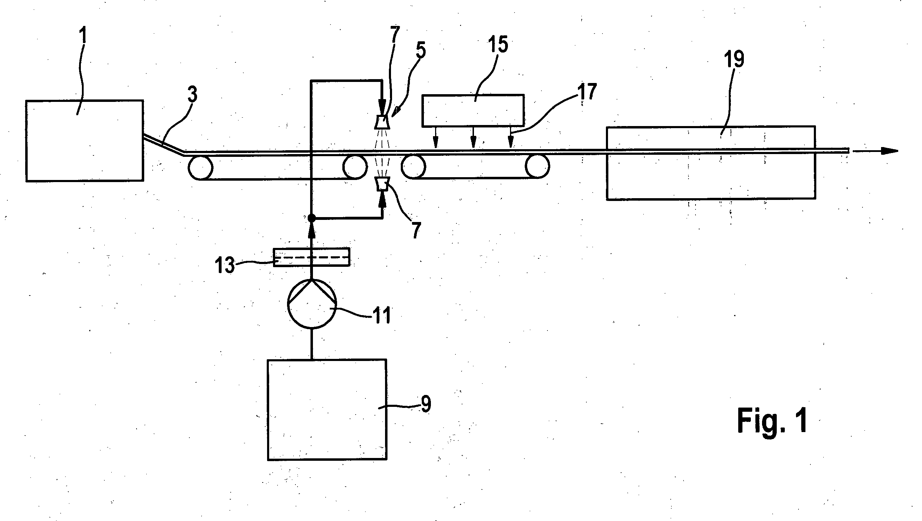

In Figur 1 ist ein vereinfachtes Verfahrensfließbild des erfindungsgemäßen Verfahrens dargestellt.

In einem Extruder 1 wird ein Elastomermaterial zu einem Strangprofil 3 geformt. Hierzu wird das Elastomermaterial unter Druck durch ein geeignetes Werkzeug des Extruders gepresst.

Üblicherweise wird zur Herstellung des Strangprofils dem Extruder 1 Kautschukmaterial als Halbzeug, zum Beispiel in Form eines Endlosstranges, zugegeben. Das Kautschukmaterial wird im Extruder plastifiziert und durch das Werkzeug zum Strangprofil gepresst.

Als Extruder kann jeder beliebige, dem Fachmann bekannte Extruder eingesetzt werden. Üblicherweise eingesetzte Extruder weisen mindestens drei Zonen, eine Einzugszone, eine Aufschmelzzone und eine Ausstoßzone auf. Je nach Kautschukmaterial können weitere Zonen vorgesehen sein. So kann der Extruder zum Beispiel mindestens eine Entgasungszone aufweisen, in der das Kautschukmaterial entgast wird. Ein zur Herstellung des Strangprofils aus dem Elastomermaterial geeigneter Extruder ist dem Fachmann bekannt.

In der hier dargestellten Ausführungsform wird das Strangprofil 3 nach dem Verlassen des Extruders 1 einer Beschichtungsvorrichtung 5 zugeführt. In der Beschichtungsvorrichtung 5 wird das Strangprofil 3 mit einer Pulvermaterial enthaltenen Suspension beschichtet. Das Beschichten des Strangprofils 3 kann zum Beispiel durch ein Sprühverfahren, wie hier dargestellt, erfolgen. Zum Aufsprühen der Suspension werden dazu üblicherweise geeignete Sprühdüsen eingesetzt. Die Zerstäubung der Suspension in den Sprühdüsen erfolgt zum Beispiel dadurch, dass die Suspension bei Verlassen engtspannt wird und dabei zu Tropfen zerfällt oder allgemein eine hohe Geschwindigkeit beim Verlassen der Zerstäuberdüse 7 aufweist. Solche Zerstäuberdüsen 7 sind zum Beispiel Hochrotationsglocken. Alternativ gibt es auch Systeme, in denen die Zerstaubung durch Zufuhr eines Gases realisiert wird. Geeignete Zerstäuberdüsen 7 sind dem Fachmann bekannt.

Die auf das Strangprofil aufzubringende Suspension wird in einem Vorratsbehälter 9 bevorratet. Aus dem Vorratsbehälter 9 wird die Suspension mit Hilfe einer Pumpe 11 zu den Zerstäuberdüsen 7 transportiert. Der Vorratsbehälter 9 kann mit einer Heizvorrichtung versehen sein, um die Suspension vorzuwärmen. Geeignete Heizvorrichtungen sind zum Beispiel Heizwendeln, die in den Vorratsbehälter eingebracht werden. Alternativ ist es auch möglich, den Vorratsbehälter 9 zum Beispiel mit einem Doppelmantel auszustatten, der von einem Heizmedium durchströmt wird.

Wenn eine Heizwendel zur Erwärmung der Suspension im Vorratsbehälter 9 eingesetzt wird, so kann diese entweder von einem Wärmeträger durchströmt werden, beispielsweise einem Thermalöl oder Dampf, alternativ ist es auch möglich, eine entsprechende Heizwendel beispielsweise elektrisch zu beheizen.

Um zu vermeiden, dass agglomerierte Pulverpartikel auf das Strangprofil aufgebracht werden, ist es vorteilhaft, wenn sich an die Pumpe 11 ein Sieb 13 anschließt. Im Sieb 13 werden alle Partikel zurückgehalten, die für die Beschichtung des Strangprofils zu groß sind. Ein geeignetes Sieb weist zum Beispiel eine Maschenweite im Bereich von 20 bis 400 mesh, insbesondere im Bereich von 50 bis 200 mesh, beispielsweise 100 mesh auf.

Um die Suspension mit einem gleichmäßigen Druck auf das Strangprofil aufzubringen, und dadurch einen gleichmäßigen Film zu erzeugen, ist es vorteilhaft, den Zerstäuberdüsen einen Druckregler, der hier nicht dargestellt ist, vorzuschalten. Hierbei kann jeder beliebige, dem Fachmann bekannte Druckregler eingesetzt werden. Geeignete Druckregler sind zum Beispiel in Form eines Ventils ausgebildet. Um den Druck zu regeln, wird der Druck der Suspension hinter dem Druckregler gemessen und entsprechend dem gemessenen Druck kann der Leitungsquerschnitt vergrößert oder verkleinert werden und so der richtige Druck eingestellt werden. Um eine gleichmäßige Beschichtung zu realisieren, kann zusätzlich auch ein Antipulsationsfilter, der hier ebenfalls nicht dargestellt ist, eingesetzt werden.

Wenn die Zerstäubung durch einen Luftzerstäuber erfolgt, wird die Luft über ein separates System den Zerstäuberdüsen 7 zugeführt. Vorteilhaft ist es, wenn die Luft vorgeheizt wird. Der zur Zerstäubung notwendige Druck wird durch einen Kompressor erzeugt, der im System enthalten ist. Um einen sehr feinen Sprühnebel zu erhalten, wird aus der komprimierten Luft mit hohem Druck und geringem Volumen ein Luftstrom mit großem Volumen und geringem Druck erzeugt. Hierzu kann zum Beispiel ein Wagner FineCoat Controller eingesetzt werden.

Nach dem Aufbringen der Suspension auf das Strangprofil wird das Strangprofil einer Wärmebehandlung unterzogen. Hierzu ist es zum Beispiel möglich, eine Vorrichtung 15 vorzusehen, mit der das Strangprofil mit wärmer Luft 17 angeblasen wird. Durch das Anblasen des Strangprofils mit warmer Luft verdunstet das in der Suspension enthaltene Lösungsmittel und es verbleiben die trockenen Pulverpartikel auf dem Strangprofil. Die Luft, mit der das Strangprofil überströmt wird, weist dabei nur eine geringe Geschwindigkeit auf, damit die Suspension nicht vom Strangprofil geblasen wird oder eine ungleichmäßige Schicht bildet.

Neben dem Beheizen mit warmer Luft ist alternativ auch ein Beheizen zum Beispiel mit Infrarot-Strahlung möglich. Bevorzugt ist jedoch aufgrund der besseren Temperatureinstellbarkeit eine Wärmebehandlung durch Anströmen mit warmer Luft.

Nach dem Entfernen des Lösungsmittels aus der Suspension wird das Strangprofil 3, das mit dem Pulvermaterial beschichtet ist, durch ein Salzbad 19 zur Vulkanisation geleitet. Nach der Vulkanisation wird das Strangprofil aus dem Elastomermaterial aus dem Prozess entnommen und einer Weiterbehandlung zugeführt. In der Weiterbehandlung wird das Strangprofil zum Beispiel in die gewünschten Profile, für die es später eingesetzt wird, geschnitten.

Die Belegungsdichte des Pulvermaterials auf dem Strangprofil aus dem Elastomermaterial lässt sich zum Beispiel durch die Konzentration des Pulvermaterials in der Suspension und/oder durch die Schichtdicke der Suspension einstellen. Je größer die Schichtdicke der Suspension auf dem Elastomermaterial ist, umso dichter wird das Elastomermaterial nach dem Entfernen des Lösungsmittels mit dem Pulvermaterial belegt. Ebenso führt eine höhere Konzentration an Pulvermaterial in der Suspension zu einer dichteren Belegung des Elastomermaterials mit dem Pulvermaterial, nachdem das Lösungsmittel entfernt ist.

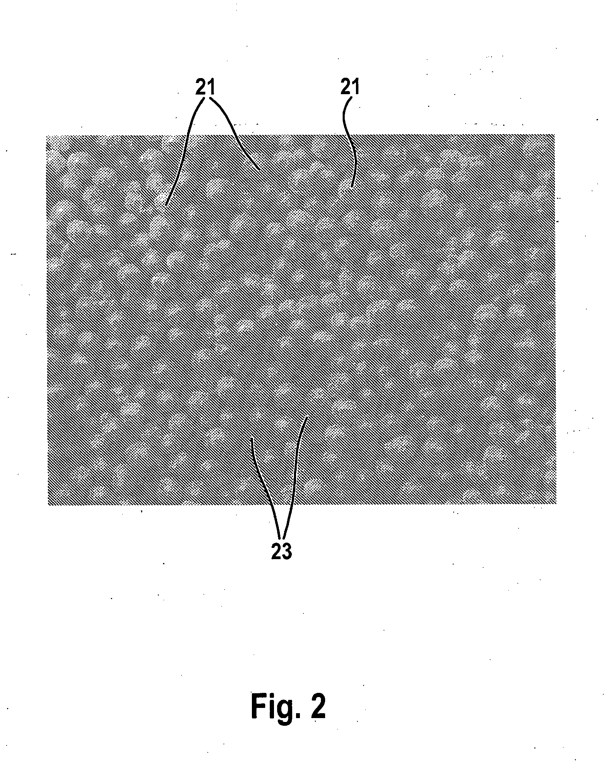

Eine elektronenmikroskopische Aufnahme eines Ausschnitts eines mit einem Pulvermaterial beschichteten Strangprofils ist in Figur 2 dargestellt.

In Figur 2 ist deutlich zu erkennen, dass das Pulvermaterial 21 in einzelnen Pulverkörnern als Monolage auf dem Elastomermaterial 23 aufliegt. Das Pulver bildet keinen dichten Film, sondern es sind zwischen einzelnen Pulverkörnern freibleibende Bereiche zu erkennen, an denen die Oberfläche- des Elastomermaterials 23 zu sehen ist. Auch bilden sich keine Agglomerate oder Klumpen aus den einzelnen Pulverpartikeln, sondern die Pulverpartikel liegen jeweils nebeneinander auf dem Elastomermaterial 23 auf.

Die Herstellung des in Figur 2 dargestellten mit einem Pulvermaterial beschichteten Elastomermaterials erfolgte, indem eine Suspension, die 15 Gew.-% Polyethylenkörner und 5 Gew.-% Polyoxyethylen in Wasser enthält, auf das Elastomermaterial aufgesprüht wurde. Nach dem Entfernen des Wassers durch Anblasen mit warmer Luft wurde das Elastomermaterial vulkanisiert.

Der mittlere Durchmesser d50 der Polyethylen körner, mit denen das Elastomermaterial beschichtet ist, beträgt 15 µm. Als Elastomermaterial wurde ein Ethylen-Propylen-Dien-Terpolymer (EPDM) eingesetzt.

## Patentansprüche

1. Verfahren zur Beschichtung eines Strangprofils (3) aus einem Elastomermaterial (23) mit einer Monolage aus einem Pulvermaterial (21), folgende Schritte umfassend:
(a) Extrusion des Strangprofils (3) aus dem Elastomermaterial (23),
(b) Aufbringen einer Suspension, die das Pulvermaterial (23) in einem Lösungsmittel enthält, auf das Strangprofil (3),
(c) Entfernen des Lösungsmittels,
(d) Vulkanisieren des Strangprofils,
wobei das Aufbringen der Suspension auf das Strangprofil (3) in Schritt (b) und das Entfernen des Lösungsmittels in Schritt (c) vor oder nach dem Vulkanisieren des Strangprofils (3) in Schritt (d) erfolgen kann, wobei das Pulvermaterial (21) ein Polyphenylen-Ether (PPE) enthält.

2. Verfahren gemäß Anspruch 1, **dadurch gekennzeichnet, dass** das Pylermaterial (21) neben dem Polyphenylen-Ether (PPE) zusätzlich ein Material ausgewählt aus der Gruppe bestehend aus Polyolefinen, insbesondere Polyethylen mit ultrahohen Molekulargewicht (UHMW-PE), und/oder Polyethylen mit hohem Molekulargewicht (HMW-PE) und/oder Polyethylen (PE), und/oder fluoriertes Ethylen-Propylen (FEP) und/oder Perfluoralkoxy-Polymere (PFA) und/oder Polycarbonate (PC) und/oder Polyoxymethylen (POM) und/oder Polyacrylate und/oder Polyamide (PA) und/oder Polyurethane (PUR) und/oder Polytetrafluorethylen (PTFE) und/oder Polyethylenterephthalat (PET) und/oder Polybutylenterephthalat (PBT) sowie Mischungen aus diesen Materialien enthält.

3. Verfahren gemäß Anspruch 1 oder 2, **dadurch gekennzeichnet, dass** der Anteil an Pulvermaterial (21) in der Suspension im Bereich von 10 bis 50 Gew.-% liegt.

4. Verfahren gemäß einem der Ansprüche 1 bis 3, **dadurch gekennzeichnet, dass** vor dem Vulkanisieren des Strangprofils (3) die Suspension aufgebracht wird und das Lösungsmittel entfernt wird.

5. Verfahren gemäß einem der Ansprüche 1 bis 4, **dadurch gekennzeichnet, dass** das Lösungsmittel durch eine Wärmebehandlung entfernt wird.

6. Verfahren gemäß Anspruch 5, **dadurch gekennzeichnet, dass** die Wärmebehandlung ein Anblasen des Strangprofils (3) mit warmer Luft (17) umfasst.

7. Verfahren gemäß einem-der Ansprüche 1 bis 6, **dadurch gekennzeichnet, dass** das Lösungsmittel Wasser ist.

8. Verfahren gemäß einem der Ansprüche 1 bis 7, **dadurch gekennzeichnet, dass** die Suspension mindestens eine oberflächenaktive Substanz enthält.

9. Verfahren gemäß einem der Ansprüche 1 bis 8, **dadurch gekennzeichnet, dass** die Suspension zusätzlich einen UV-Stabilisator und/oder einen Naftvermittler enthält.

10. Verfahren gemäß einem der Ansprüche 1 bis 9, **dadurch gekennzeichnet, dass** das Strangprofil (3) zum Vulkanisieren durch ein Salzbad (19) geleitet wird.

11. Verfahren gemäß einem der Ansprüche 1 bis 10, **dadurch gekennzeichnet, dass** die Suspension mit einem Sprühverfahren auf das Strangprofil (3) aufgebracht wird.

## Claims

1. Process for the coating of a profile strip (3) made of an elastomer material (23) with a monolayer made of a powder material (21), comprising the following steps:
(a) extrusion of the profile strip (3) made of the elastomer material (23),
(b) application, to the profile strip (3), of a suspension which comprises the powder material (23) in a solvent,
(c) removal of the solvent,
(d) vulcanization of the profile strip,
where the application of the suspension to the profile strip (3) in step (b) and the removal of the solvent in step (c) can take place before or after the vulcanization of the profile strip (3) in step (d), where the powder material (21) comprises a polyphenylene ether (PPE).

2. Process according to Claim 1, **characterized in that** the powder material (21) also comprises, alongside the polyphenylene ether (PPE) a material selected from the group consisting of polyolefins, in particular ultrahigh-molecular-weight polyethylene (UHMWPE), and/or high-molecular-weight polyethylene (HMWPE) and/or polyethylene (PE), and/or fluorinated ethylene-propylene (FEP) and/or perfluoroalkoxy polymers (PFA) and/or polycarbonates (PC) and/or polyoxymethylene (POM) and/or polyacrylates and/or polyamides (PA) and/or polyurethanes (PUR) and/or polytetrafluoroethylene (PTFE) and/or polyethylene terephthalate (PET) and/or polybutylene terephthalate (PBT) and mixtures of the said materials.

3. Process according to Claim 1 or 2, **characterized in that** the proportion of powder material (21) in the suspension is in the range from 10 to 50% by weight.

4. Process according to any of Claims 1 to 3, **characterized in that** before the vulcanization of the profile strip (3) the suspension is applied and the solvent is removed.

5. Process according to any of Claims 1 to 4, **characterized in that** the solvent is removed by treatment with heat.

6. Process according to Claim 5, **characterized in that** the treatment with heat comprises blowing of warm air (17) onto the profile strip (3).

7. Process according to any of Claims 1 to 6, **characterized in that** the solvent is water.

8. Process according to any of Claims 1 to 7, **characterized in that** the suspension comprises at least one surface-active substance.

9. Process according to any of Claims 1 to 8, **characterized in that** the suspension also comprises a UV stabilizer and/or an adhesion promoter.

10. Process according to any of Claims 1 to 9, **characterized in that**, for the vulcanization process, the profile strip (3) is passed through a salt bath (19).

11. Process according to any of Claims 1 to 10, **characterized in that** the suspension is applied to the profile strip (3) by a spray process.

## Revendications

1. Procédé pour le revêtement d'un profilé extrudé (3) en un matériau élastomère (23) par une monocouche en un matériau en poudre (21), comprenant les étapes suivantes :
(a) extrusion du profilé extrudé (3) en matériau élastomère (23),
(b) application d'une suspension qui contient le matériau en poudre (23) dans un solvant sur le profilé extrudé (3),
(c) élimination du solvant,
(d) vulcanisation du profilé extrudé,
l'application de la suspension sur le profilé extrudé (3) dans l'étape (b) et l'élimination du solvant dans l'étape (c) pouvant avoir lieu avant ou après la vulcanisation du profilé extrudé (3) dans l'étape (d), le matériau en poudre (21) contenant un polyphénylène-éther (PPE).

2. Procédé selon la revendication 1, **caractérisé en ce que** le matériau en poudre (21) contient, outre le polyphénylène-éther (PPE), en plus un matériau choisi dans le groupe constitué par les polyoléfines, en particulier le polyéthylène présentant un poids moléculaire ultra-élevé (UHMW-PE) et/ou le polyéthylène présentant un poids moléculaire élevé (HMW-PE) et/ou le polyéthylène (PE), et/ou l'éthylène-propylène fluoré (FEP) et/ou les perfluoroalcoxypolymères (PFA) et/ou les polycarbonates (PC) et/ou le polyoxyméthylène (POM) et/ou les polyacrylates et/ou les polyamides (PA) et/ou les polyuréthanes (PUR) et/ou le polytétrafluoroéthylène (PTFE) et/ou le poly(téréphtalate d'éthylène) (PET) et/ou le poly(téréphtalate de butylène) (PBT) ainsi que des mélanges de ces matériaux.

3. Procédé selon la revendication 1 ou 2, **caractérisé en ce que** la proportion de matériau en poudre (21) dans la suspension se situe dans la plage de 10 à 50% en poids.

4. Procédé selon l'une quelconque des revendications 1 à 3, **caractérisé en ce que** la suspension est appliquée et le solvant est éliminé avant la vulcanisation du profilé extrudé (3).

5. Procédé selon l'une quelconque des revendications 1 à 4, **caractérisé en ce que** le solvant est éliminé par un traitement thermique.

6. Procédé selon la revendication 5, **caractérisé en ce que** le traitement thermique comprend un soufflage du profilé extrudé (3) par de l'air chaud (17).

7. Procédé selon l'une quelconque des revendications 1 à 6, **caractérisé en ce que** le solvant est l'eau.

8. Procédé selon l'une quelconque des revendications 1 à 7, **caractérisé en ce que** la suspension contient au moins une substance tensioactive.

9. Procédé selon l'une quelconque des revendications 1 à 8, **caractérisé en ce que** la suspension contient en plus un stabilisant des UV et/ou un promoteur d'adhérence.

10. Procédé selon l'une quelconque des revendications 1 à 9, **caractérisé en ce que** le profilé extrudé (3) est guidé au travers d'un bain de sel (19) pour la vulcanisation.

11. Procédé selon l'une quelconque des revendications 1 à 10, **caractérisé en ce que** la suspension est appliquée sur le profilé extrudé (3) par un procédé de pulvérisation.
